(19) Europäisches Patentamt
European Patent Office
Office européen des brevets

(11) **EP 4 109 009 A1**

(12) **EUROPÄISCHE PATENTANMELDUNG**

(43) Veröffentlichungstag:
**28.12.2022   Patentblatt 2022/52**

(21) Anmeldenummer: **22178613.0**

(22) Anmeldetag: **13.06.2022**

(51) Internationale Patentklassifikation (IPC):
*F24H 9/20* (2022.01)       *F24H 9/28* (2022.01)
*F24H 15/156* (2022.01)       *F24H 15/212* (2022.01)
*F24H 15/219* (2022.01)       *F24H 15/235* (2022.01)
*F24H 15/238* (2022.01)       *F24H 15/421* (2022.01)
*G01K 17/06* (2006.01)

(52) Gemeinsame Patentklassifikation (CPC):
**F24H 9/2035; F24H 9/28; F24H 15/156;
F24H 15/212; F24H 15/219; F24H 15/235;
F24H 15/238; F24H 15/421; G01K 17/06**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **21.06.2021   DE 102021206320**

(71) Anmelder: **Robert Bosch GmbH
70442 Stuttgart (DE)**

(72) Erfinder:
• **Stumpp, Hermann
73730 Esslingen (DE)**
• **Mueller, Niclas
73734 Esslingen Am Neckar (DE)**
• **Verdaasdonk, Bart Willem
7554 MC Beckum (NL)**
• **Lang, Raphael
35305 Gruenberg (DE)**

(54) **VERFAHREN ZUM BESTIMMEN UND/ODER OPTIMIEREN EINER WÄRMELEISTUNG EINES HEIZGERÄTS SOWIE HEIZGERÄT UND STEUERGERÄT**

(57)      Die Erfindung betrifft ein Verfahren zum Bestimmen und/oder Optimieren einer Wärmeleistung eines Heizgeräts (10), insbesondere eines Gas-Brennwert-Heizgeräts, mit mindestens einem Wärmeübertrager (16), der an einen Wärmekreis (22) anschließbar ist, wobei durch den Wärmeübertrager (16) ein Heizmedium (24) fließt und wobei der Wärmeübertrager (16) Energie von einem Wärmeträgermedium (32) auf das Heizmedium (24) überträgt, mit folgenden Schritten:

(100) Bestimmen der momentan zugeführten Menge eines Energieträgers (34), über den das Heizmedium (24) direkt oder indirekt erwärmt wird,

(110) Bestimmen einer momentanen Effizienz des Wärmeübertragers (16),

(120) Bestimmen einer momentanen Wärmeleistung mittels der zugeführten Menge des Energieträgers (34) und der momentanen Effizienz des Wärmeübertragers (16),

(130) Anzeigen und/oder Einstellen der Effizienz beziehungsweise einer optimierten Effizienz des Heizgeräts (10). Die Erfindung betrifft auch ein Heizgerät (10), das durch das Verfahren betrieben werden kann sowie ein Steuergerät (50), das eingerichtet ist, das erfindungsgemäße Verfahren auszuführen.

Fig. 2

EP 4 109 009 A1

**Beschreibung**

Offenbarung der Erfindung

Die Erfindung betrifft ein Verfahren zum Bestimmen und oder Optimieren einer Wärmeleistung eines Heizgeräts. Die Erfindung betrifft weiter ein Heizgerät, auf dem das erfindungsgemäße Verfahren ablaufen kann, sowie ein Steuergerät, das geeignet ist, das erfindungsgemäße Verfahren auszuführen.

Es ist bekannt, die von einem Heizgerät auf ein Heizmedium abgegebene Wärmeleistung mittels so genannter Wärmezähler zu messen. Diese basieren im Kern auf der Messung des Wärmekapazitätsstroms über eine Volumen- bzw. Massenstrommessung und der Messung der Temperaturdifferenz zwischen dessen Ein- und Austritt. Zusammen mit der zugeführten Brennstoffmenge kann daraus die Effizienz des Heizgeräts ermittelt werden. Es ist jedoch ein so genannter Wärmezähler hierfür notwendig.

Vorteile der Erfindung

Das erfindungsgemäße Verfahren zum Bestimmen und/oder Optimieren einer Wärmeleistung eines Heizgeräts mit mindestens einem Wärmeübertrager, der an einen Wärmekreis anschließbar ist, wobei durch den Wärmeübertrager ein Heizmedium fließt und wobei der Wärmeübertrager Energie von einem Wärmeträgermedium auf das Heizmedium übertragt, ist gekennzeichnet durch die Schritte:

Bestimmen der momentan zugeführten Menge eines Energieträgers, über den das Heizmedium direkt oder indirekt erwärmt wird,
Bestimmen einer momentanen Effizienz des Wärmeübertragers,
Bestimmen einer momentanen Wärmeleistung mittels der zugeführten Menge des Energieträgers und der momentanen Effizienz des Wärmeübertragers, Anzeigen und/oder Einstellen der Effizienz bzw. einer optimierten Effizienz des Heizgeräts.

Bei dem Heizgerät handelt es sich insbesondere um ein sogenanntes Gas-Brennwert-Heizgerät. Bei dieser Art von Heizgerät wird das Abgas so weit abgekühlt, dass die im Abgas mitgeführte Flüssigkeit auskondensiert.

Bei den üblichen Heizgeräten wird als Heizmedium in der Regel Wasser eingesetzt, das in einem Wärmeübertrager erwärmt wird. Als Wärmeträgermedium fungiert in der Regel ein Abgas, das über die Verbrennung eines Energieträgers gewonnen wird. Als Energieträger finden in der Regel Gas, zum Beispiel Erdgas, Wasserstoff oder der gleichen oder auch Öl Anwendung. Auch andere Energieträger sind möglich. Unter der Effizienz des Wärmeübertragers ist ein Wert zu verstehen, der angibt wie viel der im Abgas enthaltenen Wärme auf das Heizmedium übertragen wird. Die Wärmeleistung gibt an, mit welcher Wärmemenge pro Zeit das Heizgerät arbeitet. In einem Gas-Brennwert-Heizgerät wird das Gas verbrannt und erwärmt so indirekt das Heizmedium. Bei anderen Energieträger, wie beispielsweise Sonneneinstrahlung kann die Erwärmung direkt erfolgen.

Durch die in den Unteransprüchen aufgeführten Merkmale sind vorteilhafte Weiterbildungen des Verfahrens nach dem Hauptanspruch möglich. So erhält man durch die zusätzlichen Schritte:

Aufsummieren einer über die momentane Wärmeleistung bestimmten Wärmemenge, insbesondere mit Bezug zum jeweilig aufgenommen Zeitpunkt,
Aufsummieren der momentan zugeführten Menge des Energieträgers, insbesondere mit Bezug zum jeweilig aufgenommenen Zeitpunkt,
Berechnen der Effizienz des Heizgeräts zu bestimmten Zeiträumen,
Anzeigen und/oder Einstellen der Effizienz bzw. einer optimierten Effizienz des Heizgeräts, insbesondere in den definierten Zeiträumen,
eine einfache Möglichkeit, die Effizienz des Heizgeräts insgesamt oder zu vorbestimmten oder bestimmbaren Zeiträumen zu ermitteln und gegebenenfalls anzuzeigen. Diese ermittelte Effizienz kann herangezogen werden, um das Heizgerät zu vorbestimmten oder bestimmbaren Zeiträumen in seinen Einstellungen, insbesondere in seiner Leistung zu optimieren. Sie kann auch herangezogen werden, die Effizienz des Heizgeräts zum aktuellen Zeitpunkt (momentan) oder zu vorbestimmten bzw. bestimmbaren Zeiträumen darzustellen, umso dem Benutzer die Möglichkeit einer effizienteren Nutzung seines Heizgeräts zu ermöglichen.

Unter Ermitteln soll verstanden werden, dass beispielsweise mit in einem Steuergerät vorhandenen oder einem Steuergerät zugeführten Daten die entsprechende Größe berechnet wird oder aus Dateien herausgesucht wird. Dabei können auch logische Operationen Anwendung finden.

Eine einfache Möglichkeit die momentan zugeführte Menge eines Energieträgers zu bestimmen erhält man, wenn man die Drehzahl einer den Energieträger fördernden Vorrichtung bestimmt. Eine solche Vorrichtung kann beispielsweise eine Pumpe oder ein Gebläse sein. Das Bestimmen der Drehzahl kann durch Messen erfolgen oder, wenn die Drehzahl durch ein Steuergerät eingestellt wird, direkt durch diesen die drehzahlbestimmenden Parameter.

Die momentane Effizienz des Wärmeübertragers lässt sich vorteilhaft über eine Abgastemperatur bestimmen oder schätzen. Die Abgastemperatur stellt dabei ein Maß für die Wärmemenge dar, die dem Heizmedium nicht zugeführt wurde.

Es ist von Vorteil, wenn die momentane Effizienz des Wärmeübertragers über eine Abgastemperatur und der momentan zugeführten Menge eines Energieträgers bestimmt, insbesondere geschätzt wird, wobei die Abgastemperatur über eine Rücklauftemperatur und die momentan zugeführte Menge des Energieträgers bestimmt, insbesondere geschätzt wird, wobei ein, insbesondere empirisch ermittelter Wärmeübertrager-spezifischer Faktor herangezogen wird. Unter Schätzen wird dabei verstanden, dass Erfahrungswerte herangezogen werden, über die direkt oder indirekt der entsprechende Wert ermittelt wird. Unter dem Wärmeübertrager-spezifischen Faktor wird eine Größe verstanden, die den jeweiligen, eingesetzten Wärmeübertrager charakterisiert. Dabei gehen Größe, Strömungsführung des Heizmediums, eingesetzte, die Wärmeübertragungsfläche vergrößernde Elemente und dergleichen ein. Der Wert wird empirisch beispielsweise im Labor für jeden Wärmeübertrager und gegebenenfalls für unterschiedliche Arbeitspunkte ermittelt und im Steuergerät abgelegt. Unter einem Arbeitspunkt soll ein satz von Parametern verstanden werden, unter denen der Wärmeübertrager oder auch ein Heizgerät betrieben werden.

Die Erfindung betrifft auch ein Heizgerät, insbesondere ein Gas-Brennwert-Heizgerät, mit mindestens einem Wärmeübertrager, der an einen Wärmekreis anschließbar ist, wobei im Betrieb des Heizgeräts durch den Wärmeübertrager ein Heizmedium fließt und wobei der Wärmeübertrager Energie von einem Wärmeträgermedium auf das Heizmedium überträgt, mit einem Steuergerät, das dazu eingerichtet ist, das erfindungsgemäße Verfahren auszuführen. Dieses Heizgerät hat den Vorteil, dass seine aktuelle Effizienz oder die Effizienz zu vorbestimmten oder bestimmbaren Zeiträumen darstellbar ist bzw. dass diese Effizienz herangezogen werden kann, eine Optimierung der Betriebsweise des Heizgeräts vorzunehmen.

Die Erfindung betrifft auch ein Steuergerät, das geeignet zum Ausführen des erfindungsgemäßen Verfahrens ist. Dies Steuergerät zeichnet sich insbesondere durch einen Speicher aus, in dem ein Wärmeübertrager-spezifischer Faktor abgelegt ist.

In vorteilhafter Weise kann in dem Speicher des Steuergeräts eine Kennlinie oder mehrere Kennlinien oder ein Kennlinienfeld oder mehrere Kennlinienfelder abgelegt sein, die einen Zusammenhang zwischen einer Abgastemperatur und einer Effizienz des Wärmeübertragers darstellen. Kennlinien oder Kennlinienfelder sind dabei in der Regel als zwei oder mehrdimensionale Vektoren in einem Speicher des Steuergeräts abgelegt.

Zeichnung

In der Zeichnung ist die Erfindung schematisch dargestellt und in der nachfolgenden Beschreibung näher erläutert. Es zeigen Figur 1 ein schematisches Heizgerät, Figur 2 ein möglicher Verfahrensablauf in einem Flussdiagramm und Figur 3 ein Diagramm, das die Abhängigkeit der Effizienz eines Wärmeübertragers von einer geschätzten Abgastemperatur aufzeigt.

Beschreibung

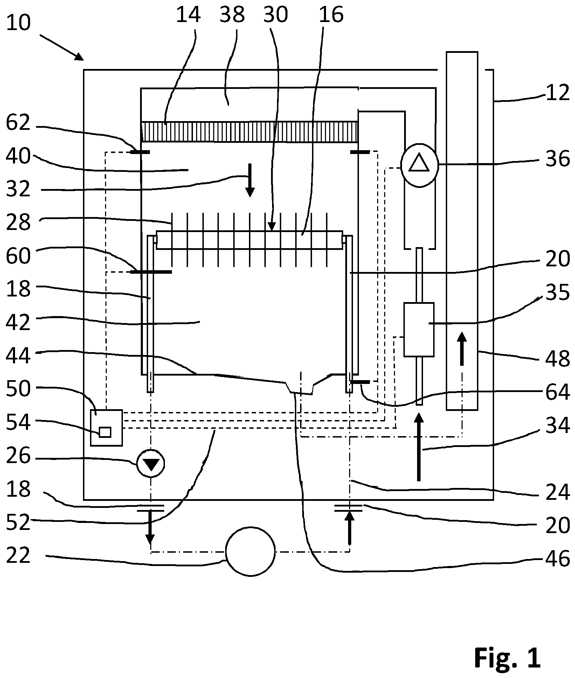

In der Figur 1 ist ein Heizgerät 10 dargestellt, das in einem äußeren Gehäuse 12 einen Brenner 14 sowie einen Wärmeübertrager 16 aufnimmt. Der Wärmeübertrager 16 ist über einen Vorlauf 18 und einen Rücklauf 20 an einen Wärmekreis 22 anschließbar. Durch den Wärmeübertrager 16 und den Wärmekreis 22 fließt ein Heizmedium 24, das im Ausführungsbeispiel mittels einer Pumpe 26 angetrieben ist.

Der Wärmeübertrager 16 ist im Ausführungsbeispiel mit Lamellen 28 ausgestattet, die eine Vergrößerung der Oberfläche 30 des Wärmeübertragers 16 bewirken. An dieser Oberfläche 30 kühlt sich ein vom Brenner 14 geliefertes Wärmeträgermedium 32 ab, so dass durch den Wärmeübertrager 16 Wärme auf das Heizmedium 24 übertragen wird.

Der Brenner 14 ist im Ausführungsbeispiel mittels Erdgas als Energieträger 34 betrieben, das über ein Ventil 35 zusammen mit Umgebungsluft von einem Gebläse 36 angesaugt und über eine Mischkammer 38 dem Brenner 14 zur Verfügung gestellt wird. Im Anschluss an den Brenner 14 befindet sich eine Brennkammer 40, in der der Energieträger 34 verbrannt und in das Wärmeübertragungsmedium 32 gewandelt wird. Die Brennkammer 42 ist vom Brenner 14, seitlich von Wänden und gegenüber dem Brenner 14 vom Wärmeübertrager 16 begrenzt. Durchströmt das Wärmeübertragungsmedium 32 den Wärmetauscher 16 gelangt es in eine Abgassammelkammer 42, an deren Grund eine Kondensatsammelwanne 44 angeordnet ist. Das Wärmeübertragungsmedium 32 wird über einen Auslass 46 einem Abgaskanal 48 zugeführt, über den es das Heizgerät 10 letztendlich verlässt.

Dem Heizgerät 10 ist ein Steuergerät 50 zugeordnet, das im Ausführungsbeispiel innerhalb des Gehäuses 12 angeordnet ist. Das Steuergerät 50 kann auch außerhalb des Heizgeräts 10 oder teilweise innerhalb und teilweise außerhalb angeordnet sein. Über Leitungen 52 ist das Steuergerät 50 mit weiteren Komponenten des Heizgeräts 10, wie beispielsweise dem Gebläse 36 oder der Pumpe 26, verbunden. Die Leitungen 52 können einzelne, separate Leitungen, Stränge oder auch ein oder mehrere Bussysteme oder Kombinationen davon sein.

Das Steuergerät 50 weist neben den für die Steuerung respektive Regelung des Heizgeräts 10 notwendigen Bauelemente mindestens einen Speicher 54 für permanente und/oder flüchtige Daten auf.

Das Steuergerät 50 ist eingerichtet, das Heizgerät nach bestimmten Verfahren und Regelalgorithmen zu betreiben. Es ist insbesondere eingerichtet, dass es das erfindungsgemäße Verfahren ausführen kann. Dazu ist das Steuergerät 50 mit den notwendigen Informationen ausgerüstet oder so ausgestattet, dass es die Informationen aus einer Cloud empfangen kann.

Im Ausführungsbeispiel sind noch Messfühler angebracht. So dient ein erster Messfühler 60 zum Bestimmen der Temperatur des Wärmeträgermediums 32 nach dem Wärmeübertrager 16. Ein zweiter Messfühler 62 dient zum Bestimmen der Temperatur des Wärmeträgermediums 32 nach dem Brenner 14. Ein dritter Messfühler dient zum Bestimmen der Temperatur des Heizmediums 24 im Rücklauf 20.

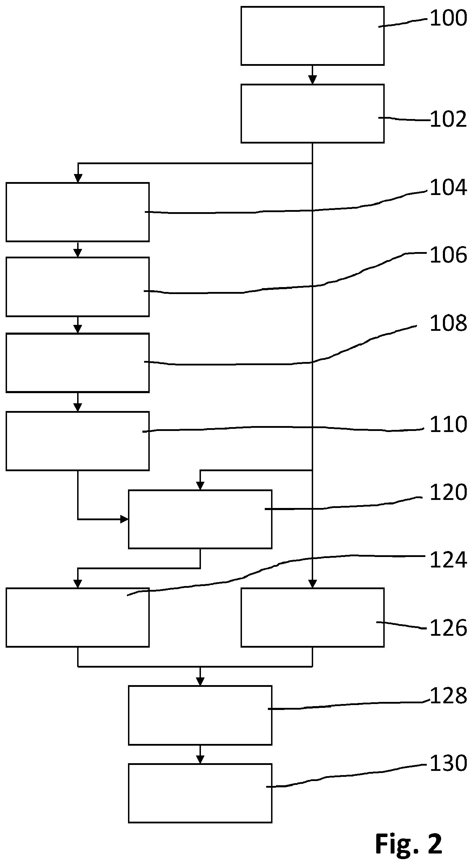

In Figur 2 ist in einem Flussdiagramm ein möglicher Verfahrensablauf des erfindungsgemäßen Verfahrens zum Bestimmen und/oder Optimieren der Wärmeleistung eines Heizgeräts dargestellt. Dabei sind bereits mehrere Schritte, die eine vorteilhaft Weiterbildung des erfindungsgemäßen Verfahrens darstellen, mit aufgenommen.

In einem Schritt 100 wird die momentan zugeführte Menge eines Energieträgers 34 bestimmt.

In vorteilhafter Weise wird die zugeführte Menge des Energieträgers 34 über die Drehzahl des Gebläses 36 bestimmt. Die Drehzahl des Gebläses 36 wiederum muss im Ausführungsbeispiel selbst nicht gemessen werden, da sie als Sollwert für die Leistung des Heizgeräts 10 vorgegeben wird. Sie liegt also im Steuergerät 50, das die Leistung des gesamten Heizgeräts steuert bzw. regelt direkt vor und kann in das Verfahren in einem Schritt 102 eingebunden werden. Selbstverständlich kann die Menge des Energieträgers 34 auch auf andere Weise bestimmt werden, beispielsweise indem die zugeführte Menge direkt über einen Durchflussmesser gemessen wird oder indem eine den Durchfluss des Energieträgers charakterisierende Ventileinstellung des Ventils 35 ermittelt wird. Besonders vorteilhaft aber ist die Verwendung des momentanen Wertes der Gebläsedrehzahl.

In einem Schritt 110 wird die momentane Effizienz des Wärmeübertragers 16 bestimmt.

Die Effizienz des Wärmeübertragers 16 lässt sich über die momentane Temperatur des Wärmeträgermediums 32, also der momentanen Abgastemperatur, ermitteln. Da die Temperatur des Wärmeträgermediums 32 direkt nach dem Brenner 14 unter Berücksichtigung der Flammentemperatur des zu verbrennen den Energieträgers 34 bekannt ist, und ferner die Menge des Energieträgers 34 bekannt ist, stellt die Temperatur des Wärmeträgermediums 32 nach dem Wärmeübertrager 16 ein Maß für die Effizienz des Wärmeübertragers 16 dar.

Diesem Ansatz liegt die Erkenntnis zugrunde, dass bei Heizgeräten, insbesondere bei Gas-Brennwert-Heizgeräten ein direkter Zusammenhang zwischen deren Effizienz und der Abgastemperatur besteht. Die Effizienz kann in diesen Fällen definiert werden als die Wärmeleistung pro Energieträgerleistung. Je niedriger die Temperatur des Wärmeträgermediums 32 ist, umso mehr Wärme wird auf das Heizmedium übertragen. Daraus folgt letztendlich, dass über eine Messung der Abgastemperatur die Wärmeleistung bestimmt werden kann.

In einem Schritt 120 wird mittels der zugeführten Menge des Energieträgers 34 und der momentanen Effizienz des Wärmeübertragers 16 die momentane Wärmeleistung des Heizgeräts 10 bestimmt.

Diese Bestimmung erfolgt, wie bereits angedeutet, über den Zusammenhang:

$$(1) \qquad \text{Wärmeleistung} = \text{Effizienz} \times \text{Energiezufuhr pro Zeit}$$

In diesem Schritt 120 wird ergo die tatsächliche und momentane Effizienz und darüber auch die momentane Wärmeleistung des Heizgeräts 10 bestimmt. Dieses Ergebnis kann dann im Steuergerät 50 abgelegt werden.

Im Schritt 130 wird dann die Effizienz des Heizgeräts 10 angezeigt. Diese Anzeige kann direkt am Heizgerät 10 oder am Steuergerät 50 oder über eine App auch an mobilen Kommunikationsgeräten dargestellt werden. Selbst verständlich können auch Kombinationen der vorgenannten Darstellungen Anwendung finden. Der Benutzer des Heizgeräts 10 kann mittels dieser Angabe bzw. mittels diese Angaben sein Heizgerät 10 kontrollieren und gegebenenfalls manuell neu einstellen oder optimieren.

Die bestimmte momentane Effizienz sowie die momentane Wärmeleistung kann auch vom Steuergerät 50 zur Optimierung des Heizgeräts 10 eingesetzt werden. Dazu können im Steuergerät 50 entsprechende Routinen vorgesehen, Vergleichswerte abgelegt und vom Steuergerät 50 Steuerbefehle ausgegeben werden.

Nach dem Schritt 120 kann in einem Schritt 124 die Wärmemenge durch Aufsummieren der momentanen Wärmeleistung bestimmt werden. Hierzu kann in einer vorteilhaften Ausgestaltung die momentane Wärmeleistung zum jeweiligen aufgenommenen Zeitpunkt, also mit Bezug zu diesem Zeitpunkt, gespeichert werden. Über einen bestimmbaren oder vorbestimmten Zeitraum können dann die jeweiligen Werte der momentanen Wärmeleistung aufsummiert werden. Diese Vorgänge können direkt im Steuergerät 50 oder aber auf einem externen Server ablaufen.

In einem Schritt 126 kann die momentan zugeführte Menge des Energieträgers 34 aufsummiert werden. Hierzu kann in einer vorteilhaften Ausgestaltung die momentan zugeführte Menge des Energieträgers 34 zum jeweiligen aufgenommenen Zeitpunkt, also mit Bezug zu diesem Zeitpunkt, gespeichert werden. Über einen bestimmbaren oder vorbestimmten Zeitraum können dann die jeweiligen Werte der momentan zugeführten Menge des Energieträgers 34 aufsummiert werden. Diese Vorgänge können direkt im Steuergerät 50 oder aber auf einem externen Server ablaufen.

In einem Schritt 128 wird dann die Effizienz des Heizgeräts zu bestimmten Zeiträumen berechnet. Dazu werden die bereits bestimmten Wärmemengen und der Mengen des dafür eingesetzten Energieträgers herangezogen. Da die Werte der Mengen jeweils zu bestimmten Zeitpunkten bestimmt und diesen Zeitpunkten zugeordnet abgespeichert wurden, kann auch die Effizienz des Heizgeräts 10 zu bestimmbaren oder vorbestimmten Zeiträumen angezeigt werden. Diese Werte können auch ausgenutzt werden, um das Heizgerät aktiv zu beeinflussen, um dessen Effizienz zu erhöhen. So ist es beispielsweise möglich, zu bestimmten Tagesabschnitten an bestimmten Wochentagen die Effizienz oder auch die eingesetzten Mengen des Energieträgers 34 auszuwerten, um das Heizgerät für diese Zeit oder Zeiträume vorzukonditionieren. Die Routinen hierzu laufen dann bevorzugt im Steuergerät ab, das dann auch die entsprechenden Parameter an die Stellorgane abgibt. Es ist aber auch möglich, diese Routinen auf einem Server ablaufen zu lassen. Das hat den Vorteil, dass ein direkter Vergleich mit ähnlichen Heizgerätekonstellationen vorgenommen und die Berechnungen und Ergebnisse verglichen werden können. Dem Schritt 128 folgt dann der Schritt 130.

Wie bereits erwähnt, kann die momentan zugeführte Menge des Energieträgers 34 gemäß Schritt 100 in einem Schritt 102 in einer vorteilhaften Ausführung gemäß dem Ausführungsbeispiel nach Figur 1 durch Messen der Drehzahl des Gebläses 36 ermittelt werden. Diese Drehzahl kann beispielsweise über einen Hall-Sensor bestimmt werden. Da die Leistung des Heizgeräts im Ausführungsbeispiel durch Vorgabe der Drehzahl des Gebläses 36 geregelt wird, liegt dieser Wert im Steuergerät bereits vor und kann direkt verwendet werden. Die Regelung erfolgt in der Weise, dass eine Erhöhung der Drehzahl des Gebläses 36 einen größeren Unterdruck erzeugt, sodass mehr Luft und eine größere Menge des Energieträgers 34 angesaugt wird. Ist die notwendige Leistung erreicht, wird die Drehzahl beibehalten.

Das Bestimmen der momentanen Effizienz des Wärmeübertragers 16 im Schritt 110 wird im Ausführungsbeispiel vorteilhaft in einem Schritt 108 über die Abgastemperatur vollzogen. Die Abgastemperatur wird dazu vom Messfühler 60 aufgenommen. Der Messfühler 60 ist in der Abgassammelkammer 42 angebracht. Er sitzt in der Nähe des Wärmeübertragers 16 und kann somit die Temperatur des Abgases direkt am Ausgang des Wärmeübertragers 16 ermitteln. Bevorzugt man einen eher gemittelten Temperaturwert des Abgases, würde man den Messfühler 60 weiter entfernt vom Wärmeübertrager 16 und eher mittig in der Abgaskammer 42 platzieren.

Mit dem Messfühler 62, der in der Brennkammer 40 angeordnet ist, kann die Abgastemperatur vor dem Wärmeübertrager 16 bestimmt werden. Beide Messfühler 60, 62 sind mit dem Steuergerät 50 verbunden. Der Messfühler 62 ist in der Brennkammer 40 angebracht. Er sitzt in der Nähe des Brenners 14 und kann somit die Temperatur des Abgases direkt am Ausgang des Brenners 14 ermitteln. Bevorzugt man einen eher gemittelten Temperaturwert des Abgases, würde man den Messfühler 60 weiter entfernt vom Brenner 14 und eher mittig in der Brennkammer 40 platzieren. Es ist auch möglich und sinnvoll, den Messfühler 62 direkt vor dem Wärmeübertrager 16 zu platzieren, um die dort vorherrschende Temperatur exakt zu ermitteln.

Über die Temperaturdifferenz kann die vom Wärmeübertrager 16 abgenommene Wärmemenge pro Zeiteinheit bestimmt werden. Hierfür ergänzende Parameter, wie der Massenstrom des Wärmetragemediums 32 und dessen spezifischer Wärmekapazität, sind bekannt oder lassen sich durch bekannte Parameter, wie die pro Zeit zugeführte Menge des Energieträgers 34 und dessen Verbrennungschemie, ermitteln.

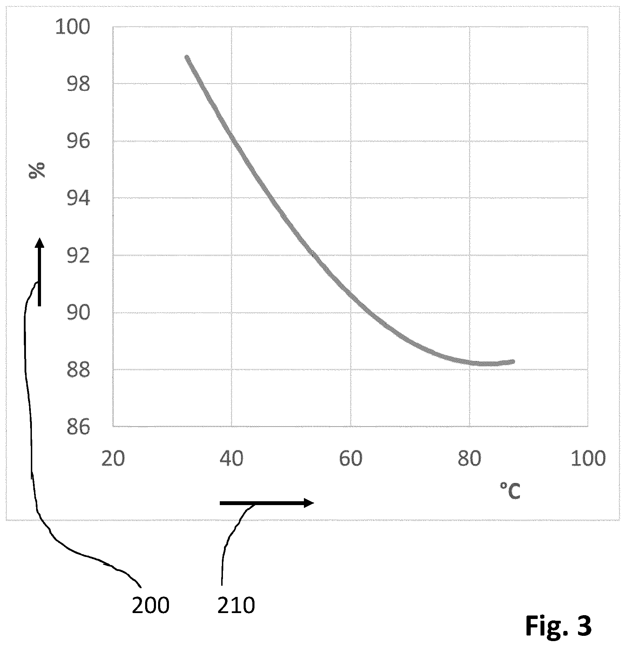

Das Abschätzen der momentanen Effizienz des Wärmeübertragers 16 gemäß Schritt 108 kann auch derart erfolgen, dass ein empirisch ermittelter Zusammenhang zwischen der Effizienz des Wärmeübertragers 16 und der des Wärmeträgermediums in einem Speicher im Steuergerät 50 abgelegt ist. Ein solcher Zusammenhang ist beispielhaft in der Figur 3 dargestellt. Dort ist die Effizienz des Wärmeübertragers 16 (Pfeil 200) über der Temperatur des Wärmeträgermediums 32 (Pfeil 210) dargestellt. Es ist erkennbar, dass die Effizienz steigt, wenn die Temperatur des Wärmeträgermediums 32 niedrig ist. Bzw. ist erkennbar, dass mit steigender Temperatur die Effizienz sinkt. Je höher die Temperatur nach dem Wärmeübertrager 16 ist, umso mehr Energie befindet sich noch im Wärmeträgermedium 32, was sich negativ auf die Effizienz auswirkt. In einem Schritt 106 wird dieser Zusammenhang dem Verfahren zur Verfügung gestellt.

Natürlich ist es auch möglich, diesen Zusammenhang zwischen Effizienz des Wärmeübertragers 16 und der Temperatur des Wärmeträgermediums 32 in einer Cloud vorzuhalten. Das hat den Vorteil, dass neue Erkenntnisse über den Zusammenhang eingespielt und direkt verwendet werden können.

Die Temperatur des Wärmeträgermediums 32 kann in einer vorteilhaften Ausgestaltung aus der Temperatur des Heizmediums 24 im Rücklauf 20, im folgenden Rücklauftemperatur genannt, sowie über die pro Zeiteinheit zugeführte Menge des Energieträgers 34 bestimmt werden, wenn bestimmte Eigenschaften des Wärmeübertragers 16 bekannt sind. Dieser vorteilhaften Ausgestaltung liegt die Erkenntnis zugrunde, dass diese Eigenschaften nicht im Detail bekannt sein müssen, sondern in einem Faktor zusammengefasst sein können. Die die Temperatur des Wärmeträgermediums 32 kann dann bestimmt bzw. geschätzt werden über folgenden Zusammenhang:

(2) Temperatur des Wärmeträgermediums = Rücklauftemperatur + F x Menge an Energieträger pro Zeiteinheit

Der Faktor F ist ein Wärmeübertrager spezifischer Faktor, der die Güte der Wärmeübertragung wiedergibt. Ist F sehr klein, ist der Wärmeübertrager sehr groß dimensioniert, so dass das Wärmeträgermedium 32 bis auf annähernd Rücklauftemperatur abgekühlt werden kann. Ein größeres F ist ein Zeichen für einen kleinen dimensionierten Wärmeübertrager. Um hier ausreichend Wärme zu übertragen, wird eine größere Temperaturdifferenz zwischen dem Heizmedium und dem Wärmeträgermedium notwendig. Der Wärmeübertrager spezifische Faktor F wird im Labor unter unterschiedlichen Bedingungen empirisch ermittelt und entweder direkt in einem Speicher des Steuergerät 50 abgelegt oder in einer Cloud bereitgestellt. In einem Schritt 104 wird dem Verfahren die so ermittelte Temperatur des Wärmeträgermediums 32 zugeführt.

Ein bevorzugtes, mit allen vorteilhaften Ausgestaltungen versehenes Verfahren würde folgendermaßen ablaufen:

Schritt 100 - Bestimmen der pro Zeiteinheit zugeführten Menge des Energieträgers 34

Schritt 102 - Bestimmen bzw. Einbinden der Drehzahl des Gebläses 36, um die Menge des Energieträgers 34 pro Zeiteinheit zu bestimmen

Schritt 104 - Bestimmen/Schätzen der Temperatur des Wärmeträgermediums 32 aus der Rücklauftemperatur

Schritt 106 - Bestimmen/Schätzen der Temperatur des Wärmeträgermediums 32 aus der Rücklauftemperatur des Heizmediums 24 sowie der Menge pro Zeiteinheit des Energieträgers 34 multipliziert einem Wärmeübertrager spezifischen Faktor

Schritt 108 - Bestimmen der Effizienz des Wärmeübertragers 16 über die Temperatur des Wärmeträgermediums 32

Schritt 110 - Bestimmen der momentanen Effizienz des Wärmeübertragers 16 ausgehend von den Schritten 104-108

Schritt 12 - Bestimmen einer momentanen Wärmeleistung des Heizgeräts mittels der zugeführten Mengen des Energieträgers 34 und der momentanen Effizienz des Wärmeübertragers 16

Schritt 124 - Aufsummieren einer über die momentane Wärmeleistung bestimmte Wärmemenge bezogen auf den jeweiligen Aufnahmezeitpunkt Schritt 126 - Aufsummieren der momentan zugeführten Menge des Energieträgers 34 bezogen auf den jeweiligen Aufnahmezeitpunkt

Schritt 128 - Berechnen der Effizienz des Heizgeräts 10 zu bestimmten Zeiträumen

Schritt 130 - Anzeigen und Einstellen der Effizienz bzw. einer optimierten Effizienz des Heizgeräts 10 zu bestimmten Zeiträumen.

**Patentansprüche**

1. Verfahren zum Bestimmen und/oder Optimieren einer Wärmeleistung eines Heizgeräts (10), insbesondere eines Gas-Brennwert-Heizgeräts, mit mindestens einem Wärmeübertrager (16), der an einen Wärmekreis (22) anschließbar ist, wobei durch den Wärmeübertrager (16) ein Heizmedium (24) fließt und wobei der Wärmeübertrager (16) Energie von einem Wärmeträgermedium (32) auf das Heizmedium (24) überträgt, mit folgenden Schritten:

   (100) Bestimmen der momentan zugeführten Menge eines Energieträgers (34), über den das Heizmedium (24) direkt oder indirekt erwärmt wird,
   (110) Bestimmen einer momentanen Effizienz des Wärmeübertragers (16),
   (120) Bestimmen einer momentanen Wärmeleistung mittels der zugeführten Menge des Energieträgers (34) und der momentanen Effizienz des Wärmeübertragers (16),
   (130) Anzeigen und/oder Einstellen der Effizienz beziehungsweise einer optimierten Effizienz des Heizgeräts (10).

2. Verfahren nach Anspruch 1, **gekennzeichnet durch** die folgenden Schritte:

   (124) Aufsummieren einer über die momentane Wärmeleistung bestimmten Wärmemenge, insbesondere mit Bezug zum jeweiligen aufgenommenen Zeitpunkt,
   (126) Aufsummieren der momentan zugeführten Menge des Energieträgers (34), insbesondere mit Bezug zum jeweiligen aufgenommenen Zeitpunkt,
   (128) Berechnen der Effizienz des Heizgeräts (10) zu vorbestimmten oder bestimmbaren Zeiträumen,
   (130) Anzeigen und/oder Einstellen der Effizienz beziehungsweise einer optimierten Effizienz des Heizgeräts (10), insbesondere in definierten Zeiträumen.

3. Verfahren nach einem der vorhergehenden Ansprüchen, **dadurch gekennzeichnet, dass** die momentan zugeführte Menge eines Energieträgers (34) mittels einer Drehzahl einer den Energieträger (34) fördernden Vorrichtung (36) bestimmt wird (102).

4. Verfahren nach einem der vorhergehenden Ansprüchen, **dadurch gekennzeichnet, dass** die momentane Effizienz des Wärmeübertragers (16) über eine Temperatur des Wärmeträgermediums (32) bestimmt, insbesondere geschätzt wird (108).

5. Verfahren nach einem der vorhergehenden Ansprüchen, **dadurch gekennzeichnet, dass** die momentane Effizienz des Wärmeübertragers (16) über eine Rücklauftemperatur des Heizmediums (24) bestimmt, insbesondere geschätzt wird (106).

6. Verfahren nach einem der vorhergehenden Ansprüchen, **dadurch gekennzeichnet, dass** die Temperatur des Wärmeträgermediums (32) über die Rücklauftemperatur und die momentan zugeführte Menge des Energieträgers (34) bestimmt, insbesondere geschätzt wird (104).

7. Verfahren nach einem der vorhergehenden Ansprüche, **dadurch gekennzeichnet, dass** die momentane Effizienz des Wärmeübertragers (16) über eine Temperatur des Wärmeträgermediums (32) und der momentan zugeführten Menge eines Energieträgers (34) bestimmt, insbesondere geschätzt wird, wobei die Temperatur des Wärmeträgermediums (32) über eine Rücklauftemperatur und die die momentan zugeführte Menge des Energieträgers (34) bestimmt, insbesondere geschätzt wird, wobei ein, insbesondere empirisch ermittelter Wärmeübertrager-spezifischer Faktor (F) herangezogen wird.

8. Heizgerät (10), insbesondere Gas-Brennwert-Heizgerät, mit mindestens einem Wärmeübertrager (16), der an einen Wärmekreis (22) anschließbar ist, wobei im Betrieb durch den Wärmeübertrager (16) ein Heizmedium (24) fließt und wobei der Wärmeübertrager (16) Energie von einem Wärmeträgermedium (32) auf das Heizmedium (24) überträgt, mit einem Steuergerät (50), das dazu eingerichtet ist, das Verfahren nach einem der vorhergehenden Ansprüche auszuführen.

9. Steuergerät (50), geeignet zum Ausführen des Verfahrens nach einem der Ansprüche 1 bis 8, **gekennzeichnet durch** einen Speicher (54), in dem ein Wärmeübertrager-spezifischer Faktor (F) abgelegt ist.

10. Steuergerät (50) nach Anspruch 9, **dadurch gekennzeichnet, dass** in dem Speicher (54) eine Kennlinie oder ein Kennlinienfeld abgelegt ist, das einen Zusammenhang zwischen einer Temperatur des Wärmeträgermediums (32) und einer Effizienz eines Wärmeübertragers (16) darstellt.

**Fig. 1**

**Fig. 2**

Fig. 3

Europäisches
Patentamt

European
Patent Office

Office européen
des brevets

# EUROPÄISCHER RECHERCHENBERICHT

Nummer der Anmeldung

EP 22 17 8613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 046235 A1 (GROSS MAREK [DE]) 29. März 2007 (2007-03-29) * Absätze [0012], [0018], [0019], [0023], [0033] – [0038], [0043], [0044]; Abbildung 3 * ----- | 1-10 | INV. F24H9/20 F24H9/28 F24H15/156 F24H15/212 F24H15/219 |
| X | DE 195 10 425 A1 (BOSCH GMBH ROBERT [DE]) 26. September 1996 (1996-09-26) * Spalten 1-7; Abbildungen 1-3 * | 1,3-10 | F24H15/235 F24H15/238 F24H15/421 |
| A | | 2 | G01K17/06 |
| X | EP 2 458 292 A2 (VAILLANT GMBH [DE]) 30. Mai 2012 (2012-05-30) * Seiten 1-3; Abbildung 1 * | 1,3-10 | |
| A | ----- | 2 | |
| X | DE 195 15 656 A1 (BOSCH GMBH ROBERT [DE]) 31. Oktober 1996 (1996-10-31) * Spalte 3, Zeile 57 – Spalte 4, Zeile 9; Abbildungen 1, 2 * ----- | 9,10 | |

**RECHERCHIERTE SACHGEBIETE (IPC)**

F24H
G01W
G01K

Der vorliegende Recherchenbericht wurde für alle Patentansprüche erstellt

| Recherchenort | Abschlußdatum der Recherche | Prüfer |
|---|---|---|
| München | 27. Oktober 2022 | Schwaiger, Bernd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 17 8613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2022

| Im Recherchenbericht angeführtes Patentdokument | Datum der Veröffentlichung | Mitglied(er) der Patentfamilie | | Datum der Veröffentlichung |
|---|---|---|---|---|
| DE 102005046235 A1 | 29-03-2007 | KEINE | | |
| DE 19510425 A1 | 26-09-1996 | DE | 19510425 A1 | 26-09-1996 |
| | | EP | 0733859 A2 | 25-09-1996 |
| EP 2458292 A2 | 30-05-2012 | EP | 2458292 A2 | 30-05-2012 |
| | | ES | 2680910 T3 | 11-09-2018 |
| DE 19515656 A1 | 31-10-1996 | DE | 19515656 A1 | 31-10-1996 |
| | | EP | 0740111 A1 | 30-10-1996 |
| | | ES | 2134402 T3 | 01-10-1999 |

Für nähere Einzelheiten zu diesem Anhang : siehe Amtsblatt des Europäischen Patentamts, Nr.12/82

EPO FORM P0461